# EUROPÄISCHE PATENTANMELDUNG

(11) **EP 1 241 403 A2**
(43) Veröffentlichungstag der Anmeldung: **18.09.2002**
(21) Anmeldenummer: 02090100.5
(22) Anmeldetag: 08.03.2002
(51) Int. Cl.: F21V 8/00, F21V 33/00

(54) **Verfahren und Vorrichtungen zur Illumination von lichtleitfähigen, keine eigene Lichtquelle aufweisenden Objekten**

(30) Priorität: 09.03.2001 DE 10112519; 11.07.2001 DE 10135090
(71) Anmelder: Appelius, Julian, 10405 Berlin (DE); Dumas, Fabien Eric Maurice, 10997 Berlin (DE)
(72) Erfinder: Appelius, Julian, 10405 Berlin (DE); Dumas, Fabien Eric Maurice, 10997 Berlin (DE)
(74) Vertreter: Hengelhaupt, Jürgen D., Dipl.-Ing.

(57) **Zusammenfassung**

Die Erfindung beschreibt Verfahren und Vorrichtung zur Illumination von lichtleitfähigen, keine eigene Lichtquelle aufweisenden Objekten (5) und ist einsetzbar insbesondere zur architektonischen Gestaltung, Gestaltung von Innenräumen durch illuminierte Objekte auf Möbelstücken, wie z. B. Tischen.
Ist z. B. eine Tischplatte als lichtleitfähiger Träger (1) (Acrylglasplatte) ausgebildet und wird Licht in diesen Träger eingeleitet, pflanzt sich das Licht mittels Totalreflexion fort und kann nicht austreten. Um Licht aus der Tischplatte herauszulenken, muss die Totalreflexion wenigstens partiell aufgehoben werden. Dies wird dadurch erreicht, dass lichtleitfähige Objekte (5) - beispielsweise Glasgeschirr - in absolut bündigem Kontakt mit der Tischplatte stehen. Um den bündigen Kontakt des Objekts (5) mit der Tischplatte herzustellen, wird das Objekt im Sockelbereich mit einem Elastomer behandelt. Das Kontaktmedium (6) gewährleistet den bündigen Kontakt und das Licht bekommt die Möglichkeit aus der Tischplatte herauszutreten und in das Objekt (5) hineinzulaufen. Das Licht bringt das Objekt zum Leuchten. Das Objekt - und nur das Objekt - leuchtet.

## Beschreibung

Die Erfindung betrifft ein Verfahren und Vorrichtungen zur Illumination von lichtleitfähigen, keine eigene Lichtquelle aufweisenden Objekten und ist einsetzbar insbesondere zur architektonischen Gestaltung, Gestaltung von Innenräumen durch illuminierte Objekte auf Möbelstücken, wie z. B. Tischen, Gestaltung von Geschäften durch illuminierte Objekte auf Vitrinen, Gestaltung von Leuchten oder auch für optische Schaltungen.

Es ist ein bekanntes physikalisches Prinzip, Licht mittels Totalreflexion für das Auge nicht sichtbar durch eine Glasscheibe oder auch eine transparente Kunststoffplatte über eine beliebige Entfernung zu leiten (Prinzip Glasfaser).
Weiterhin ist bekannt, dass das Licht an den Stellen solcher Lichtleiter sichtbar wird, an denen es z. B. durch eine Nut oder auch nur einen Kratzer in der Oberfläche, an denen die Bedingungen zur Totalreflexion aufgehoben werden, die Möglichkeit bekommt, aus der Trägerplatte auszutreten. Lösungen, die diesen Sachverhalt ausnutzen, sind u. a. in den im folgenden angeführten Schriften beschrieben: DE 37 07 204 A1 "Vorrichtung, bestehend aus einer Lichtleitplatte"; DE 39 29 811 A1 "Vorrichtung, bestehend aus einer Lichtleitplatte mit Erhebungen"; DE 39 16 471 A1 "Beleuchtungsvorrichtung für Informationsträger mit optisch wahrnehmbaren Informationen"; DE 44 07 498 A1 "Aktivierung eines optischen Wellenleiters"; EP 0 886 103 A2 "Light directing optical structure", welche eine Vorrichtung beschreibt, wo das Licht, welches in die Platte eingestrahlt wird, über Prismen, die auf die Platte aufgesetzt sind, in bestimmter Weise aus der Platte herausgelenkt wird; DE 198 41 888 "Leuchtkörper"; EP 0 561 329 A1 "Surface light source device"; DE 195 01 129 "Scheibenleuchte".

Speziell für Werbetafeln oder Displays wird dieses Prinzip in solcher Weise genutzt. Es gibt Lampen ("Waveguide"), die aus einer einseitig leicht strukturierten Acrylglasplatte bestehen, die seitlich von Leuchtstoffröhren angeleuchtet wird. Das Licht läuft durch diese Acrylglasscheibe und bricht sich an der Mikrostruktur. Die Folge ist ein gleichmäßiges Leuchten der Platte.
Es gibt ein spezielles Acrylglas ("Satlite"), welches aus kleinen Kügelchen aufgebaut ist, die das eintretende Licht streuen und für ein relativ homogenes Leuchten sorgen.

Des weiteren ist es bekannt, solche Werbetafeln aus mehreren Elementen zusammenzusetzen (DE 196 07 822 "Aus mehreren Teilen zusammengesetztes Lichtleitelement"). Hier wird beschrieben, dass die einzelnen Teile bündig aneinanderstoßen, um den Übergang der Teile nicht sichtbar werden zu lassen, wobei die Stoßkanten jedoch gleichzeitig durch reflektierende Folie bezogen sind, um zu verhindern, dass Licht von einem Teil in das andere übergeht und dabei einen Phasenübergang erfährt.

Als wesentlicher Nachteil all dieser Einrichtungen erweist sich die Tatsache, dass diese Einrichtungen statisch und nicht veränderbar sind. Wird das Licht eingeschaltet, leuchtet die Platte bzw. die Stellen des Lichtaustritts, die fest vorgegeben sind.

Weiterhin sind als Stand der Technik leuchtende Gegenstände, welche zu Dekorationszwecken eingesetzt werden, beschrieben. Beispielsweise stellen DE 198 42 893 A1 "Trinkgefäß", DE 100 20 173 A1 "Beleuchtungsvorrichtung für lichtdurchlässige Gegenstände" und EP 0 989 361 A2 "Leuchtende Trinkgläser, Trinkbecher und Flaschen" ein Trinkglas bzw. Flasche vor, welche mit einer Vorrichtung im Fuß des Glases versehen sind, die beim Abstellen das Glas zum Leuchten bringt. Die Schrift DE 41 00 951 A1 "Brettspiel" beschreibt Spielsteine, die bei Bestrahlung mit geeignetem Licht leuchten.

Aufgabe der Erfindung ist es, Vorrichtungen und ein Verfahren zu schaffen, um zu ermöglichen, Objekte ohne eigene Lichtquelle zum Leuchten zu bringen, indem sie mit einem lichtführendem Träger, z. B. einer Glasplatte oder transparenten Kunststoffplatte, in bündigen Kontakt gebracht werden. Allein durch das In-Kontakt-Bringen oder die Lösung des Kontaktes zwischen den Objekten, wird das Licht ein- bzw. ausgeschaltet.

Diese Aufgabe wird erfindungsgemäß gelöst durch die Merkmale im kennzeichnenden Teil der Ansprüche 1, 2 und 8 im Zusammenwirken mit den Merkmalen im Oberbegriff. Zweckmäßige Ausgestaltungen der Erfindung sind in den Unteransprüchen enthalten.

Ein besonderer Vorteil der Erfindung liegt darin, dass mit einfachen Mitteln ein Leuchten ein- bzw. auszuschalten, in dem durch eine Lichtquelle Licht in mindestens einen lichtleitfähigen Träger eingebracht wird und mindestens ein lichtleitfähiges, keine eigene Lichtquelle aufweisendes Objekt in direkten bündigen Kontakt mit dem lichtleitfähigen Träger gebracht wird oder der Kontakt zwischen Träger und Objekt(en) durch ein Kontaktmedium hergestellt bzw. der Kontakt wieder gelöst wird.

Gegenständlich wird die Illumination dadurch realisiert, dass die Vorrichtung mindestens eine Lichtquelle , mindestens einen lichtleitfähigen Träger und mindestens ein lichtleitfähiges Objekt umfaßt, wobei Träger und Objekt(e) auf ihrer Oberfläche Bereiche aufweisen, die derart ausgebildet sind, dass der (die) Träger in diesen Bereichen von einem lichtleitfähigen Objekt direkt bündig kontaktierbar ist (sind), oder Träger und/oder Objekt(e) in den zum Kontakt vorgesehenen Bereichen ihrer Oberfläche mit einem Kontaktmedium versehen sind, und die Lichtquelle(n) in solcher Weise angeordnet ist (sind), dass Licht in den (die) Träger eingebracht wird.

Eine bevorzugte Realisierungsform der Erfindung ist ein Tisch zur Illumination von lichtleitfähigen, keine eigene Lichtquelle aufweisenden Objekten mit einem als Tischplatte ausgebildeten Träger , an oder in welchem Lichtquellen angeordnet sind und auf welchem die Objekte anordenbar sind, wobei, die Oberfläche des (der) Träger(s) Bereiche aufweist, die derart ausgebildet sind, dass die lichtleitfähigen Objekte in diesen Bereichen in direktem bündigem Kontakt mit dem (den) Träger(n) stehen, oder der Kontakt zwischen Träger (und Objekt(en) durch ein Kontaktmedium realisiert wird.
Die Erfindung soll nachstehend anhand von zumindest teilweise in den Figuren dargestellten Ausführungsbeispielen näher erläutert werden.

Es zeigen:

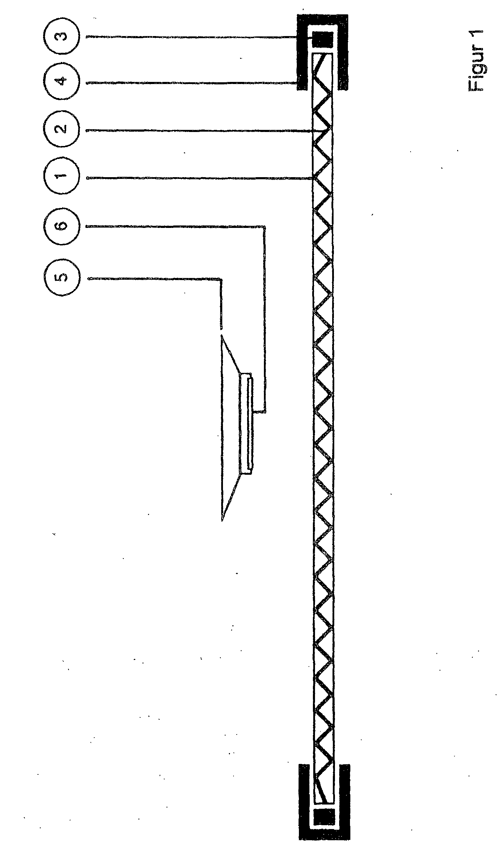

- Fig. 1: Komponenten der erfindungsgemäßen Vorrichtung;

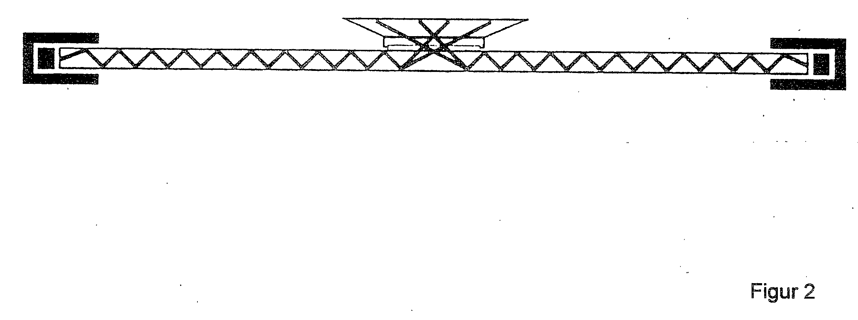

- Fig. 2: Darstellung der Funktionsweise des erfindungsgemäßen Verfahrens (ohne Kontaktmedium 6);

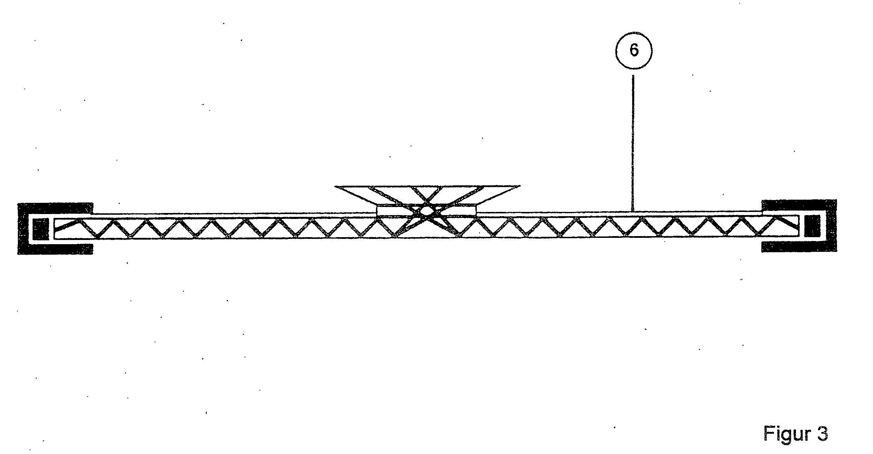

- Fig. 3: Darstellung der Funktionsweise des erfindungsgemäßen Verfahrens (unter Verwendung eines Kontaktmediums 6).

Am Beispiel eines illuminierten Eßtischs wird eine Ausführungsvariante des Verfahrens demonstriert.

In einem lichtleitfähigen Träger 1, der hier durch die Tischplatte dargestellt wird, wird durch eine Lichtquelle 3 Licht eingeleitet. Als Material für den Träger 1 werden transparente Materialien eingesetzt, beispielsweise Glas (superwite B 270), Acrylglas, Polycarbonat oder andere transparente Kunststoffe. Im Ausführungsbeispiel werden als Lichtquelle 3 LED-Schienen eingesetzt; es können aber auch alle anderen künstlichen Lichtquellen Verwendung finden. Innerhalb des lichtleitfähigen Trägers 1 pflanzt sich das Licht mittels Totalreflexion 2 fort und kann - abgesehen von den Randbereichen des lichtleitfähigen Trägers 1 nicht austreten. Das Licht läuft durch die Trägerplatte und hat keine Möglichkeit aus dieser auszutreten, ist also nicht sichtbar; der Tisch selbst leuchtet nicht. Da in den ersten ca. 4 cm das Licht noch die Möglichkeit hat, aus dem Träger 1 auszutreten, wird dieser Bereich durch einen Rahmen 4 abgedeckt.

Um Licht aus dem Träger 1 herauszulenken, um also lichtleitfähige Objekte 5 oder Materialien wie beispielsweise Matten aus Technogel, die auf dem Träger 1 angeordnet sind, zum Leuchten zu bringen, muss die Totalreflexion 2 wenigstens partiell aufgehoben werden. Dies wird z. B. dadurch erreicht, dass die lichtleitfähigen Objekte 5 - in diesem Falle Geschirrteile - in absolut bündigem Kontakt mit der Tischplatte (lichtleitfähiges Träger 1) stehen.
Es können alle möglichen Objekte - vorausgesetzt sie sind lichtleitfähig - auf die Träger- bzw. Tischplatte gestellt und somit zum Leuchten gebracht werden. Finden Matten oder Folien aus beispielsweise Technogel Verwendung, können auf den leuchtenden Matten bzw. Folien Produkte angeordnet und durch die leuchtende Umgebung hervorgehoben werden. Objekte können auch Körperteile, beispielsweise Finger, sein.

Um den bündigen Kontakt des Objekts 5, z. B. eines Glastellers (wobei wieder alle Objekte mit einer lichtleitfähigen Eigenschaft Verwendung finden können), mit dem Träger 1 auf einfache Weise sicherzustellen, wird das Objekt 5 im Sockelbereich mit einem Kontaktmedium 6 behandelt. Ein spezielles Kontaktmedium 6 ist beispielsweise das Elastomer mit dem Handelsnamen "Clear Flex 50", aber es können im Prinzip auch andere Elastomere oder alle silikonähnlichen Materialien Verwendung finden. Wird das Objekt 5 also auf den Träger 1 gestellt, gewährleistet das Kontaktmedium 6 (z. B. Elastomer) einen absolut bündigen Kontakt an der Berührungsfläche. Dieses Kontaktmedium 6 bewirkt durch seinen Brechungsindex, dass die Totalreflexion 2 an den Stellen, wo das Objekt 5 in Kontakt mit dem Träger 1 steht, aufgehoben wird. Da die Oberfläche des Trägers 1 dadurch am Berührungspunkt optisch aufgehoben wird, bekommt das Licht die Möglichkeit aus dem Träger 1 herauszutreten und in das Objekt 5 hineinzulaufen. Im Objekt 5 wiederum werden die Bedingungen zur Totalreflexion in der Regel nicht erfüllt, so dass das Licht aus dem Objekt 5 austreten kann und es somit zum Leuchten bringt. Das Objekt 5 - und nur das Objekt 5 - leuchtet.

Statt die lichtleitfähigen Objekte 5 mit einem Elastoper als Kontaktmedium 6 zu behandeln, kann auf dem Träger 1 auch ein dünner Film Flüssigkeit - beispielsweise Wasser - aufgebracht werden. Dieser Film übernimmt die gleiche Funktion, wie das Elastoper und gewährleistet einen bündigen Kontakt zwischen dem Objekt 5 und dem Träger 1. In einer weiteren Variante kann der Träger 1 vollflächig mit einem Kontaktmedium (z.B. Elastomer) behandelt werden.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

1. lichtleitfähiger Träger
2. Weg eines Lichtstrahls bei Totalreflexion
3. Lichtquelle
4. Rahmen zur Abdeckung des Randbereichs des lichtleitfähigen Trägers
5. lichtleitfähiges Objekt
6. Kontaktmedium

## Patentansprüche

1. Verfahren zur Illumination von lichtleitfähigen, keine eigene Lichtquelle aufweisenden Objekten,
**dadurch gekennzeichnet, dass**
durch eine Lichtquelle Licht in mindestens einen lichtleitfähigen Träger eingebracht wird und mindestens ein lichtleitfähiges, keine eigene Lichtquelle aufweisendes Objekt in direkten bündigen Kontakt mit dem lichtleitfähigen Träger gebracht wird oder der Kontakt zwischen Träger und Objekt(en) durch ein Kontaktmedium hergestellt wird.

2. Vorrichtung zur Illumination von lichtleitfähigen, keine eigene Lichtquelle aufweisenden Objekten,
**dadurch gekennzeichnet, dass**
die Vorrichtung mindestens eine Lichtquelle (3), mindestens einen lichtleitfähigen Träger (1) und mindestens ein lichtleitfähiges Objekt (5) umfasst, wobei Träger (1) und Objekt(e) (5) auf ihrer Oberfläche Bereiche aufweisen, die derart ausgebildet sind, dass der (die) Träger (1) in diesen Bereichen von einem lichtleitfähigen Objekt (5) direkt bündig kontaktierbar ist (sind), oder Träger (1) und/oder Objekt(e) (5) in den zum Kontakt vorgesehenen Bereichen ihrer Oberfläche mit einem Kontaktmedium (6) versehen sind, und die Lichtquelle(n) (3) in solcher Weise angeordnet ist (sind), dass Licht in den (die) Träger (1) eingebracht wird.

3. Vorrichtung nach Anspruch 2,
**dadurch gekennzeichnet, dass**
der Träger (1) aus
- Glas und/oder
- Acrylglas
besteht.

4. Vorrichtung nach Anspruch 2,
**dadurch gekennzeichnet, dass**
die Lichtquelle (3) aus mindestens einem LED-Element besteht.

5. Vorrichtung nach Anspruch 2,
**dadurch gekennzeichnet, dass**
das Kontaktmedium (6)
- ein Elastomer und/oder
- ein silikonähnliches Material und/oder
- eine Flüssigkeit
ist.

6. Vorrichtung nach einem der Ansprüche 2 oder 5,
**dadurch gekennzeichnet, dass**
das Kontaktmedium (6) als dünner Film auf dem Träger (1) und/oder Objekt (5) aufgebracht ist.

7. Vorrichtung nach Anspruch 2,
**dadurch gekennzeichnet, dass**
die, für die Kontaktierung bestimmten Oberflächenbereiche derart ausgebildet sind,
- dass die Bereiche eines lichtleitfähigen Objektes (5) passgenau komplementär zu Oberflächenbereichen des Trägers (1) geformt und/oder
- dass die Bereiche des (der) Träger und/oder lichtleitfähigen Objekte (5) formbar und an vorgegebene Formen anpassbar
sind.

8. Tisch zur Illumination von lichtleitfähigen, keine eigene Lichtquelle aufweisenden Objekten (5) mit einem als Tischplatte ausgebildeten Träger (1), an oder in welchem Lichtquellen (3) angeordnet sind und auf welchem die Objekte (5) anordenbar sind, wobei, die Oberfläche des (der) Träger(s) (1) Bereiche aufweist, die derart ausgebildet sind, dass die lichtleitfähigen Objekte (5) in diesen Bereichen in direktem bündigem Kontakt mit dem (den) Träger(n) (1) stehen, oder der Kontakt zwischen Träger (1) und Objekt(en) (5) durch ein Kontaktmedium (6) realisiert wird.

9. Tisch nach Anspruch 8,
**dadurch gekennzeichnet, dass**
der Träger (1) aus
- Glas und/oder
- Acrylglas
besteht.

10. Tisch nach Anspruch 8,
**dadurch gekennzeichnet, dass**
die Lichtquelle (3) aus mindestens einem LED-Element besteht.

11. Tisch nach einem der Ansprüche 8 bis 10,
**dadurch gekennzeichnet, dass**
die Lichtquelle (3) an der Kante des Trägers (1) angebracht ist.

12. Tisch nach Anspruch 8,
**dadurch gekennzeichnet, dass**
Der Randbereich des Trägers (1) durch einen lichtundurchlässigen Rahmen (4) abgedeckt ist.

13. Tisch nach Anspruch 8,
**dadurch gekennzeichnet, dass**
Träger (1) und Objekte (5) einen Esstisch mit Geschirr, Teller, Besteck, Glas (Gläsern) und/oder mindestens einer Lampe in Form einer Glühbirne bilden.

14. Tisch nach Anspruch 8,
**dadurch gekennzeichnet, dass**
das Kontaktmedium (6)
- ein Elastomer und/oder
- ein silikonähnliches Material und/oder
- eine Flüssigkeit
ist.

15. Tisch nach Anspruch 8,
**dadurch gekennzeichnet, dass**
die erwähnten, für die Kontaktierung bestimmten Oberflächenbereiche derart ausgebildet sind,
- dass die Bereiche eines lichtleitfähigen Objektes (5) paßgenau komplementär zu Oberflächenbereichen des Trägers (1) geformt und/oder
- dass die Bereiche des (der) Träger (1) und/oder lichtleitfähigen Objekte (5) formbar und an vorgegebene Formen anpassbar
sind.
